# EUROPEAN PATENT APPLICATION

(11) **EP 0 687 415 A2**
(43) Date of publication of application: **20.12.1995**
(21) Application number: 94113474.4
(22) Date of filing: 30.08.1994
(51) Int. Cl.: A22C 11/02

(54) **Eye-mark bar printed casing for position control by an automatic sizing machine**

(30) Priority: 17.06.1994 US 261619
(71) Applicant: Teepak, Inc., Westchester, IL 60154 (US)
(72) Inventor: Fox, Mark Lee, Pleasant Valley, MO 64068 (US); Kelley, Mark David, Kansas City, MO 64118 (US)
(74) Representative: Weber, Dieter, Dr.

(57) **Abstract**

An article of manufacture, comprising a plurality of food casings of generally tubular shape and arranged in a longitudinal direction, wherein each casing has a product label imprinted thereon, and individual casings are separated by eye-mark bars imprinted on the casings transversely to said longitudinal direction.

## Description

### Background of the Invention

The invention relates generally to food casings, and more particularly, to an article of manufacture comprising a plurality of food casings of generally tubular shape and arranged in a continuous web in a longitudinal direction, wherein each casing has a product label imprinted thereon, and individual casings are separated by eye-mark bars imprinted on the casings transversely to the longitudinal direction.

Food products such as sausage and other processed meats, cheese, sandwich spreads and the like are often packaged in tubular casings which are tied, clipped or otherwise secured at both ends. Larger size packages (e.g., one to three pounds) are known in the industry as chub packages.

Chub packages are typically made of fibrous film, polyethylene film, saran film, or a combination of polyethylene film and saran film. Usually two or more plies of film are used, and at least one ply is imprinted with information about the product. Thus, the film functions both as a package and as a permanent label for the product.

It is desirable that the imprinted label be centered between the end clips. In the past, attempts have been made to solve this problem by placement of eye-marks on the web, which eye-marks can be sensed and used to trigger the cutting and clipping operations. Since the eye-marks are imprinted on the casings, a problem arises in that the sensor is capable of sensing both the eye-marks and the label itself. To solve this interference problem, the eye-marks have traditionally been placed on the casing in a position free from the label. For example, if the label is on the "top" of the casing, the eye-marks would be placed on the "side" of the casing to avoid interference. Unfortunately, this solution requires very precise positioning of web casing on the filling machine relative to the location of the sensor.

Thus, a need has existed for a web containing a plurality of casings having imprinted labels separated by eye-marks which does not require precise positioning of the web on the filling machine relative to the location of the sensor.

### Summary of the Invention

The present invention is an article of manufacture comprising a plurality of food casings of generally tubular shape and arranged in a web in a longitudinal direction, wherein each casing has a product label imprinted thereon, and individual casings are separated by eye-mark bars imprinted on the casings transversely to said longitudinal direction.

A general object of the invention is to provide an improved web of food casings separated by eye-mark bars which obviates the need for precise positioning of the web on the filling apparatus.

### Brief Description of the Drawings

Figure 1 is a plan view of a portion of the invention prior to filling;
Figure 2 is a perspective view of a portion of the invention prior to filling;
Figure 3 is a perspective view of a portion of the invention after filling;
Figure 4 is a side view of an individual filled casing.

### Detailed Description of the Invention

The food casings of the present invention are typically made of fibrous film, polyethylene film, saran film, or a combination of polyethylene film and saran film. The casings may be stuffed and clipped automatically, semi-automatically or manually. The casings are imprinted with various product information. Typically, chub packages are produced in one to three pound sizes, although the present invention is not limited to any particular size or type of package. The packages may contain sausage, chopped or ground beef, chili, cheese, poultry products, bologna, sandwich spreads, sloppy joe or any other food product.

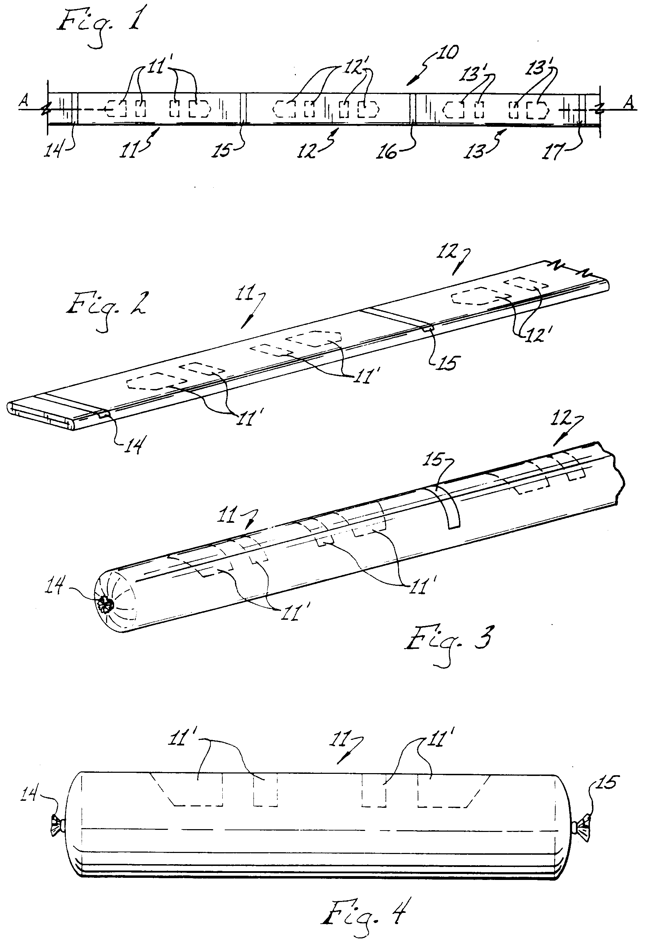

Figure 1 is a plan view illustrating casing web 10, which comprises a plurality of individual casings. Representative casing packages 11, 12 and 13 are shown. Each casing is imprinted with a product label. For example, casing 11 contains label 11', casing 12 contains label 12', and casing 13 contains label 13'. It is desired to cut the web at precise locations such that the product labels will be centered between the ends of the finished casing.

Each label is bounded by eye-mark bars which are located equidistantly on either side of the label. Each eye-mark bar is centered between adjacent labels. Label 11' is bounded by bars 14 and 15; label 12' is bounded by bars 15 and 16; and label 13' is bounded by bars 16 and 17.

The individual casings are arranged in the web adjacent one another in a longitudinal direction A-A. The eye-mark bars are imprinted transversely to the longitudinal direction A-A and, in a preferred embodiment, are arranged perpendicularly to the longitudinal direction A-A.

Figure 2 is a perspective view of a portion of the invention prior to filling. This figure clearly shows that the web is a flattened tube with labels and eye-mark bars imprinted on the top hemisphere thereof. The tube may be subsequently shirred to form shirred casing strands as is well known in the art. Each bar is equally spaced between adjacent labels and, in a preferred embodiment, each bar is a straight line segment.

Figure 3 is a perspective view of a portion of the invention after filling. An end clip has been secured to casing 11 at eye-mark bar 14. During filling, stuffed casing 11 would actually be cut and clipped at eye-mark bar 15, but, for illustration only, casings 11 and 12 are shown as continuously stuffed. To facilitate sensing of the eye-mark bars, the bars extend approximately halfway around the circumference of the filled casing. This orientation and position of the eye-mark bars reduces the precision required in positioning the web over the sizing ring in the filling apparatus. In other words, the tube may be rotated almost as much as 180° in either direction without adversely affecting the sensing operation. Alternatively, the eye-mark bar may extend continuously (i.e., 360°) about the casing which would completely obviate the need for precise positioning of the casing over the sizing ring.

The eye-mark bars of the present invention extend beyond the longitudinal boundaries of the product labels, and are positioned so as to be detectable photoelectrically without interference from the labels. For example, if a product label is two inches wide, as measured circumferentially, the length of the eye-mark bar would be greater than two inches and would extend beyond the label width on both sides.

Figure 4 is a side view of individual filled casing 11, which has been clipped at eye-mark bars 14 and 15, respectively.

While the embodiment described above constitutes a preferred embodiment of this invention, it is to be understood that the invention is not limited to this precise form, and that changes may be made therein without departing from the scope of the invention as defined in the appended claims.

## Claims

1. An article of manufacture, comprising a plurality of food casings of generally tubular shape and arranged in a web in a longitudinal direction, wherein each casing has a product label imprinted thereon, characterized in that individual casings are separated by eye-mark bars imprinted on said casings transversely to said longitudinal direction.

2. An article of manufacture as recited in Claim 1 wherein said eye-mark bars are imprinted on said casings perpendicularly to said longitudinal direction.

3. An article of manufacture as recited in Claim 1 wherein said eye-mark bars are imprinted on the same hemisphere of said tube as said imprinted labels.

4. An article of manufacture as recited in Claim 1 wherein each eye-mark bar is equally spaced between adjacent imprinted labels.

5. An article of manufacture as recited in Claim 1 wherein each eye-mark bar comprises a straight line segment imprinted on said casing.

6. An article of manufacture as recited in Claim 5 wherein the eye-mark bars extend approximately halfway about the circumference of the casing tube.

7. An article of manufacture as recited in Claim 5 wherein the eye-mark bars extend 360° about the circumference of the casing tube.

8. An article of manufacture as recited in Claim 1 wherein said plurality of food casings is made of fibrous material.

9. An article of manufacture as recited in Claim 1 wherein said plurality of food casings is made of saran film.

10. An article of manufacture as recited in Claim 1 wherein said plurality of food casings is made of polyethylene film.

11. An article of manufacture as recited in Claim 1 wherein said plurality of food casings is made of a combination of saran film and polyethylene film.

12. An article of manufacture as recited in Claim 1 wherein said bars are positioned so as to be detectable photoelectrically without interference from said label.

13. An article of manufacture as recited in Claim 1 wherein said eye-mark bars extend beyond longitudinal boundaries of said product labels.
